# FASCICULE DE BREVET EUROPEEN

(11) **EP 3 064 406 B1**
(45) Date de publication et mention de la délivrance du brevet: **08.04.2020**
(21) Numéro de dépôt: 16157491.8
(22) Date de dépôt: 26.02.2016
(51) Int. Cl.: B60S 1/38

(54) **BALAI D'ESSUIE-GLACE POUR UN SYSTÈME D'ESSUYAGE DE VÉHICULE**
SCHEIBENWISCHERBLATT FÜR EIN REINIGUNGSSYSTEM EINES FAHRZEUGS
WINDSCREEN WIPER FOR A VEHICLE WIPER SYSTEM

(30) Priorité: 03.03.2015 FR 1551768
(43) Date de publication de la demande: 07.09.2016
(73) Titulaire: Valeo Systèmes d'Essuyage, 78322 Le Mesnil Saint Denis (FR)
(72) Inventeur: CAILLOT, Gérald, 78720 CERNAY LA VILLE (FR); JARASSON, Jean-Michel, 78321 LE MESNIL SAINT DENIS (FR); IZABEL, Vincent, 91380 CHILLY MAZARIN (FR)
(74) Mandataire: Valeo Systèmes d'Essuyage

(56) Documents cités:
- EP-A1- 2 008 890
- EP-A2- 2 596 999
- FR-A1- 2 890 026
- FR-A1- 2 902 393

## Description

La présente invention concerne un balai d'essuie-glace, en particulier pour un système d'essuyage d'un pare-brise de véhicule, par exemple automobile, ainsi qu'un procédé d'assemblage d'un balai d'essuie-glace.

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes d'une raclette d'essuyage réalisée en une matière élastique. Cette raclette frotte contre le pare-brise et évacue l'eau en l'amenant en dehors du champ de vision du conducteur. Dans une version dénommée *"flat blade"* (pour "lame plate"), les balais sont réalisés sous la forme d'un ensemble semi-rigide qui maintient la raclette sur toute sa longueur grâce à un ou des éléments structurels permettant d'appliquer le balai sur le pare-brise.

Un balai d'essuie-glace du type flat-blade est relié au bras d'entraînement par un élément de liaison central. Ce balai comprend, outre l'élément de liaison, une monture de support longitudinale formée par deux tronçons longitudinaux. La monture est reliée à l'élément de liaison et comporte un corps supérieur tubulaire d'axe principal longitudinal et des moyens inférieurs de support d'une raclette d'essuyage. Le balai comprend aussi au moins un élément structurel en forme de lame longitudinale qui est monté dans ledit corps.

Ce type de balai d'essuie-glace a néanmoins pour inconvénient que, à cause des tolérances de fabrication, il existe un jeu entre la monture et l'élément structurel et/ou l'élément de liaison. Exploitant ce jeu, et à cause des vibrations dues au mouvement du véhicule sur lequel le balai est monté et au mouvement du balai lui-même, la monture effectue un mouvement de va-et-vient par rapport à l'élément de liaison et/ou à l'élément structurel. Ce mouvement répétitif peut amener à une détérioration de la monture, de l'élément de liaison et de l'élément structurel, et peut mener à un démontage accidentel des différents éléments du balai. Ceci est amplifié lorsque la monture est formée de tronçons comme expliqué dans ce qui précède.

Le document EP 2 008 890 divulgue un balai d'essuie-glace selon le préambule de la revendication 1.

L'invention a donc pour but de proposer un balai d'essuie-glace qui ne présente pas ces problèmes.

L'invention propose à cet effet un balai d'essuie-glace d'orientation principale longitudinale, comportant :
- un élément de liaison du balai avec un bras d'entraînement ;
- une monture de support longitudinale qui est reliée à l'élément de liaison et qui comporte un corps supérieur d'axe principal longitudinal et des moyens inférieurs de support d'une raclette d'essuyage; et
- au moins un élément structurel en forme de lame longitudinale, qui est monté dans ledit corps,
la monture étant collée ou soudée à l'élément structurel et/ou à l'élément de liaison caractérisé en ce que la monture ou le corps comporte des trous en face de zones où la monture est collée ou soudée à l'élément structurel et/ou à l'élément de liaison, les trous étant configurés pour autoriser le passage d'un outil de soudage ou collage

Le fait de coller ou souder la monture à l'élément de liaison et/ou à l'élément structurel permet d'augmenter la solidité du balai d'essuie-glace. Notamment car cela évite le mouvement relatif de la monture par rapport à l'élément de liaison et/ou à l'élément structurel. En effet, la monture adhérant par collage ou soudage à l'élément de liaison et/ou à l'élément structurel, elle ne peut plus bouger par rapport à l'élément de liaison et/ou à l'élément structurel, ce qui supprime les problèmes de la technique antérieure.

Le balai d'essuie-glace selon l'invention peut comprendre une ou plusieurs des caractéristiques suivantes, prises isolément ou en combinaison les unes avec les autres :
- le corps est soudé à l'élément structurel et/ou à l'élément de liaison;
- la monture est soudée par laser ou ultrason à l'élément structurel et/ou à l'élément de liaison;
- la partie de la monture qui est collée ou soudée à l'élément de liaison est une portion d'une paroi supérieure horizontale du corps;
- au moins un des éléments parmi la monture, le corps et l'élément structurel comporte un matériau favorisant le collage ou le soudage dudit élément sur la monture ou le corps;
- le matériau est de même nature que le corps ou la monture;
- la monture comprend une nervure supérieure longitudinale qui s'étend verticalement vers le haut au-dessus du corps tubulaire;

La présente invention concerne également un procédé d'assemblage d'un balai d'essuie-glace d'orientation principale longitudinale comportant :
- un élément de liaison du balai avec un bras d'entraînement;
- une monture de support longitudinale qui est reliée à l'élément de liaison et qui comporte un corps supérieur d'axe principal longitudinal et des moyens inférieurs de support d'une raclette d'essuyage; et
- au moins un élément structurel en forme de lame longitudinale, qui est monté dans ledit corps,
le procédé comprenant une étape de collage ou soudage de la monture de support à l'élément structurel et/ou l'élément de liaison, le procédé comprenant les étapes suivantes en ordre quelconque:
- liaison de tronçons longitudinaux de ladite monture audit élément de liaison ;
- montage dudit élément structurel dans le corps formé par les tronçons longitudinaux ; et
- collage ou soudage des tronçons longitudinaux à l'élément de liaison et/ou à l'élément structurel,
ou
le procédé comprenant les étapes suivantes en ordre quelconque :
- montage dudit élément structurel dans l'élément de liaison;
- liaison de tronçons longitudinaux de ladite monture audit élément de liaison ; et
- collage ou soudage des tronçons longitudinaux à l'élément de liaison et/ou à l'élément structurel,
caractérisé en ce que le soudage est réalisé avec un outil introduit dans un trou d'au moins un des tronçons longitudinaux.

Le procédé selon l'invention peut comprendre une ou plusieurs des caractéristiques suivantes, prises isolément ou en combinaison les unes avec les autres (et en ordre quelconque) :
- le soudage est réalisé avec ou sans apport de matière;
- le soudage est réalisé par ultrason ou laser;
- placement d'un matériau favorisant le collage ou le soudage sur l'élément de liaison ; et
- placement d'un matériau favorisant le collage ou le soudage sur l'élément structurel.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un balai d'essuie-glace conforme à l'invention;
- la figure 2 est une vue en perspective éclatée du balai représenté à la figure 1 ;
- la figure 3 est une vue en perspective de dessous du balai, montrant des zones d'adhésion et des trous selon une première réalisation de l'invention;
- la figure 4 est une section du balai, suivant un plan longitudinal vertical, montrant des zones d'adhésion et des trous selon une première réalisation de l'invention;
- la figure 5 est un schéma de procédé d'assemblage d'un balai d'essuie-glace selon une première réalisation de l'invention;
- la figure 6 est une section du balai, suivant un plan longitudinal vertical, montrant des zones d'adhésion selon une deuxième réalisation de l'invention;
- la figure 7a est une vue de section de l'élément structurel selon une deuxième réalisation de l'invention ;
- la figure 7b est une vue de section de l'élément structurel selon une version alternative d'une deuxième réalisation de l'invention ;
- la figure 8 est un schéma de procédé d'assemblage d'un balai d'essuie-glace selon une deuxième réalisation de l'invention;
- la figure 9 est une vue en perspective de dessous du balai, montrant des zones d'adhésion et des trous selon une troisième réalisation de l'invention;
- la figure 10 est une section du balai, suivant un plan longitudinal vertical, montrant des zones d'adhésion et des trous selon une troisième réalisation de l'invention;

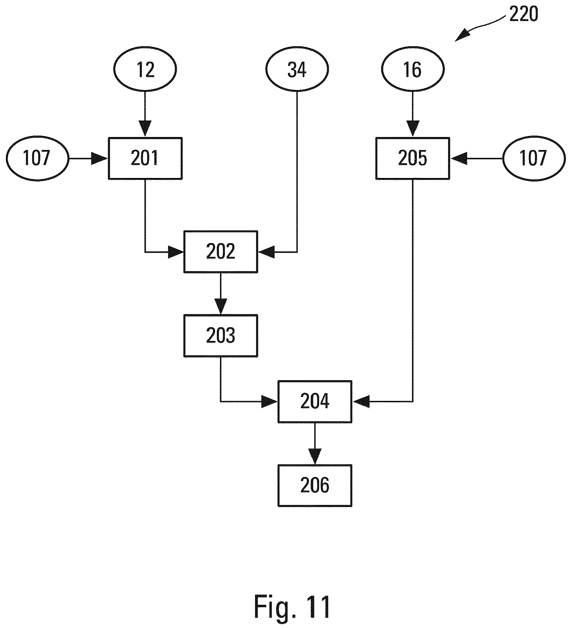

- la figure 11 est un schéma de procédé d'assemblage d'un balai d'essuie-glace selon une troisième réalisation de l'invention ;
- la figure 12 est une vue en perspective de dessous du balai montrant un procédé selon une réalisation de l'invention ; et
- la figure 13 est un schéma de procédé d'assemblage d'un balai d'essuie-glace selon une réalisation de l'invention.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

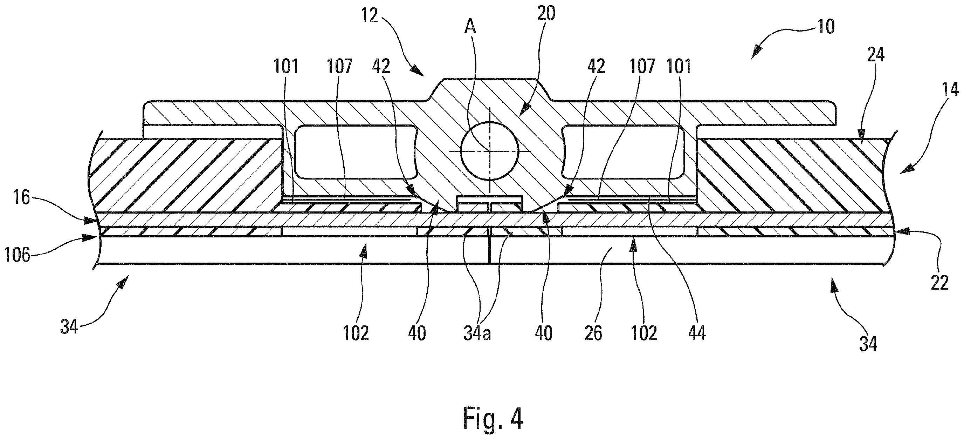

On a représenté aux figures un balai d'essuie-glace 10 de type "flat-blade" qui comporte un élément de liaison 12 du balai 10 à un bras d'entraînement (non représenté), une monture de support 14 qui est reliée à l'élément de liaison 12, un élément structurel appelé vertèbre 16 (figure 4) et une raclette inférieure 18. Dans le cas d'un balai chauffant, la vertèbre 16 peut comporter un film chauffant et une liaison électrique à ce film chauffant.

La monture de support 14 comporte un corps central tubulaire 22 d'axe principal longitudinal, qui reçoit la vertèbre 16. Le corps tubulaire 22 est préférentiellement en plastique, par exemple en polypropylène.

La monture de support 14 comporte aussi des moyens inférieurs de montage de la raclette d'essuyage, qui consistent ici en deux crochets inférieurs longitudinaux 26 en vis-à-vis, qui délimitent un logement longitudinal ouvert vers le bas, dans lequel un talon supérieur complémentaire de la raclette 18 est monté.

Enfin, la monture 14 comporte une nervure supérieure longitudinale 24 qui s'étend verticalement vers le haut depuis le corps central 22, et qui est conformée aérodynamiquement de manière à générer des efforts d'appui du balai 10 sur la surface vitrée, sous l'action du vent relatif produit par le déplacement du véhicule.

Le corps central 22, les crochets 26 et la nervure supérieure 24 sont de préférence fabriqués par co-extrusion.

La vertèbre 16 rigidifie la monture 14. La vertèbre 16 est réalisée en un matériau relativement rigide, par exemple en acier, et elle consiste en une lame horizontale longitudinale qui est agencée à l'intérieur du corps tubulaire 22.

L'élément de liaison 12 est agencé longitudinalement globalement au milieu de la monture 14, il comporte, dans sa partie supérieure, des moyens 20 de liaison avec le bras d'entraînement, qui permettent notamment d'articuler le balai 10 par rapport au bras autour d'un axe A transversal.

L'élément de liaison 12 comporte dans sa partie inférieure des crochets inférieurs longitudinaux 30 qui sont répartis de part et d'autre du corps 22 de la monture de support 14, de manière que l'élément de liaison 12 chevauche le corps 22 de la monture 14.

La nervure supérieure 24 comporte une ouverture 32 au travers de laquelle l'élément de liaison 12 est monté sur la monture 14.

Comme on peut le voir aux figures, la monture de support 14 est formée en deux tronçons longitudinaux 34 qui sont agencés longitudinalement dans le prolongement l'un de l'autre, et dont les extrémités longitudinales internes 34a en vis-à-vis des deux tronçons 34 sont jointives (figure 4), c'est-à-dire que leurs faces verticales transversales en vis-à-vis sont en appui longitudinalement l'une contre l'autre.

Ainsi, chaque tronçon longitudinal 34 comporte une partie du corps tubulaire 22 recevant la vertèbre 16, et une partie de chaque crochet 26 recevant le dos de la raclette 18.

De plus, les extrémités longitudinales internes 34a des tronçons longitudinaux 34 sont solidarisées l'une à l'autre par l'intermédiaire de l'élément de liaison 12.

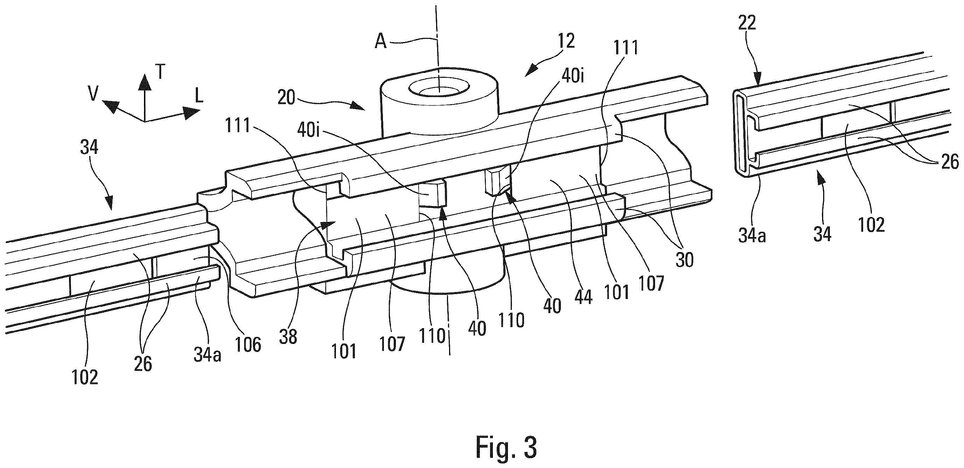

Comme on peut le voir plus en détail à la figure 3, les crochets inférieurs 30 de l'élément de liaison 12 délimitent un logement longitudinal 38 qui est débouchant à ses deux extrémités longitudinales, de sorte que l'extrémité interne 34a de chaque tronçon longitudinal 34 est montée sous l'élément de liaison 12 selon un mouvement de translation longitudinale au travers de l'ouverture associée du logement longitudinal 38.

L'élément de liaison 12 comporte aussi des moyens pour le maintien de l'extrémité interne 34a de chaque tronçon longitudinal 34 dans le logement longitudinal 38, consistant en un ergot 40 qui est porté par l'élément de liaison, et qui est reçu dans une ouverture associée 42 de l'extrémité interne 34a associée d'un tronçon longitudinal 34.

Comme on peut le voir à la figure 3, chaque ergot 40 fait saillie vers le bas par rapport à une face horizontale inférieure 44 de l'élément de liaison 12, cette face horizontale 44 délimitant la partie supérieure du logement longitudinal 38.

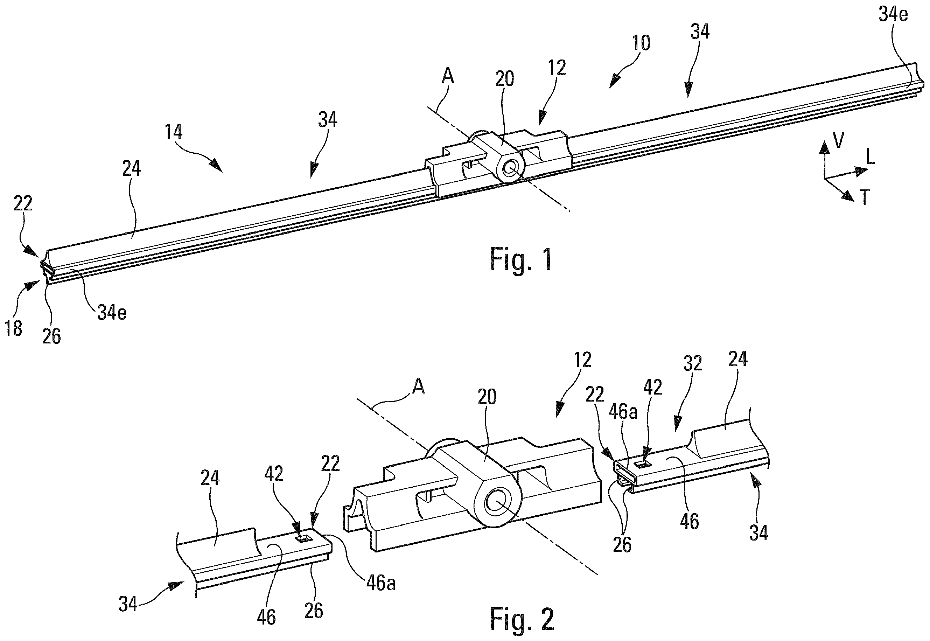

Comme on peut le voir à la figure 2, l'ouverture 42 de l'extrémité interne 34a de chaque tronçon longitudinal 34 est réalisée dans une paroi supérieure horizontale 46 du tronçon longitudinal 34 qui forme la partie supérieure du corps 22 du tronçon longitudinal 34, et qui est agencée verticalement entre la vertèbre 16 et la nervure supérieure 24 ou la face inférieure 44 de l'élément de liaison 12.

Dans le mode de réalisation représenté à la figure 2, la largeur de l'ouverture 42 est inférieure à la largeur de la paroi supérieure horizontale 46.

Selon une variante de réalisation non représentée, l'ouverture 42 s'étend transversalement sur toute la largeur de la paroi supérieure 46, c'est-à-dire que l'ouverture 42 coupe la paroi supérieure 46 en deux portions longitudinales.

Comme on l'a dit plus haut, l'extrémité interne 34a de chaque tronçon longitudinal 34 est introduite dans le logement longitudinal 38 de l'élément de liaison 12, selon un mouvement de translation longitudinale.

L'extrémité longitudinale interne 46a de la paroi supérieure 46 est apte à se déformer élastiquement vers le bas, c'est-à-dire à l'intérieur du corps tubulaire 22 lors de l'introduction de l'extrémité interne 34a du tronçon longitudinal 34 associé, et cette déformation de l'extrémité interne 46a de la paroi supérieure 46 est provoquée par l'ergot 40 associé.

Chaque ergot 40 comporte à cet effet une portion inférieure 40i en forme de rampe sur laquelle l'extrémité interne 46a de la paroi supérieure 46 est apte à s'appuyer vers le haut, pour faciliter la déformation de l'extrémité interne 46a de la paroi supérieure 46.

Cette déformation de l'extrémité interne 46a de la paroi supérieure 46 facilite l'introduction de l'extrémité interne 34a de chaque tronçon longitudinal 34 dans le logement longitudinal 38, jusqu'à ce que l'ouverture 42 de l'extrémité interne 46a de la paroi supérieure 46 soit située au niveau de l'ergot 40 associé. L'ergot pénètre alors dans l'ouverture 42, et la paroi supérieure 46 reprend élastiquement sa forme plane initiale. L'extrémité interne 34a du tronçon longitudinal 34 est alors en position montée sous l'élément de liaison 12.

La vertèbre 16 est montée dans le corps tubulaire 22 postérieurement au montage des deux tronçons 34 sous l'élément de liaison 12. De plus, la vertèbre 16 est conformée de manière que, lorsqu'elle est en position montée dans le corps tubulaire 22, elle s'appuie vers le haut contre une face inférieure en vis-à-vis de la paroi supérieure 46 de chaque tronçon longitudinal 34.

Ainsi, la vertèbre 16 empêche l'extrémité interne 46a de la paroi supérieure 46 de se déformer vers le bas sous l'action de l'ergot 40 associé. La vertèbre 16 réalise par conséquent un verrouillage de l'extrémité interne 46a de la paroi supérieure 46 en position montée sous l'élément de liaison 12.

Le balai 10 comporte aussi des moyens non représentés pour le verrouillage longitudinal de la vertèbre 16 en position montée dans le corps tubulaire 22, qui sont de préférence agencés au niveau de l'extrémité longitudinale externe 34e de chaque tronçon longitudinal 34.

Selon une première réalisation de l'invention représentée aux figures 3 et 4, les tronçons longitudinaux 34 qui forment la monture 14 sont fixés par soudure ou collage à l'élément de liaison 12. La fixation entre eux se fait préférentiellement sur deux zones d'adhésion 101. Pour l'élément de liaison, les zones d'adhésion 101 se situent dans le logement longitudinal 38 entre les crochets inférieurs longitudinaux 30. Pour les deux tronçons longitudinaux 34, elles sont présentes sur la face intérieure de la paroi supérieure horizontale 46 du corps tubulaire 22, une zone d'adhésion étant présente sur chacun des deux tronçons longitudinaux 34.

Chacune des zones d'adhésion a préférentiellement une longueur substantiellement égale ou inférieure à la distance entre l'extrémité 110 d'un ergot 40 sur sa portion inférieure 40i en forme de rampe et un bord 111 de la paroi supérieure du logement longitudinal 38, ce bord 111 correspondant à la limite entre une région de l'élément de liaison 12 prévue pour l'insertion de la paroi supérieure 46 de l'élément tubulaire 12 et une région de l'élément de liaison 12 prévue pour l'insertion de la nervure supérieure longitudinale 24. Chacune des zones d'adhésion a préférentiellement une largeur substantiellement égale ou inférieure à la distance entre les crochets inférieurs longitudinaux 30.

Les tronçons longitudinaux 34 sont chacun percés d'un trou 102 sur une paroi inférieure horizontale 106 du corps tubulaire 22. Les trous 102 sont entre les crochets 26 et substantiellement face aux zones d'adhésion 101 après assemblage. Les trous 102 ont une taille suffisante pour le passage d'un outil pour le soudage. Les trous 102 ont substantiellement la même longueur que les zones d'adhésion 101 et une largeur dans l'intervalle entre la distance séparant les extrémités de deux crochets 26 se faisant face et la distance séparant les deux crochets 26 à l'endroit où ils rejoignent le corps tubulaire 22. Lors de l'assemblage du balai, après l'insertion des tronçons longitudinaux 34 dans l'élément de liaison 12 et préférentiellement avant l'insertion de la vertèbre 16, les trous 102 permettent le passage d'un outil pour le soudage des tronçons longitudinaux 34 à l'élément de liaison 12. Dans l'exemple présenté, les zones d'adhésion 101 sont sensiblement rectangulaires et au nombre de deux, mais d'autres réalisons de ces zones sont possibles dans le cadre de l'invention.

Lors de l'assemblage du balai, un matériau 107 favorisant l'adhésion est présent sur l'élément de liaison 12 dans les zones d'adhésion 101, avant l'insertion des tronçons longitudinaux 34 dans l'élément de liaison 12. Ce matériau 107 augmente la solidité de la fixation par collage ou soudage. Le matériau 107 peut être par exemple un adhésif qui améliore le collage. Alternativement, le matériau 107 peut être aussi un matériau de même nature que le corps tubulaire 22 qui améliore l'adhésion par soudage, par exemple du polypropylène si le corps tubulaire est en polypropylène. Le matériau 107 peut avoir été déposé ou surmoulé sur l'élément de liaison 12. Le matériau 107 peut couvrir partiellement ou totalement les zones d'adhésion 101.

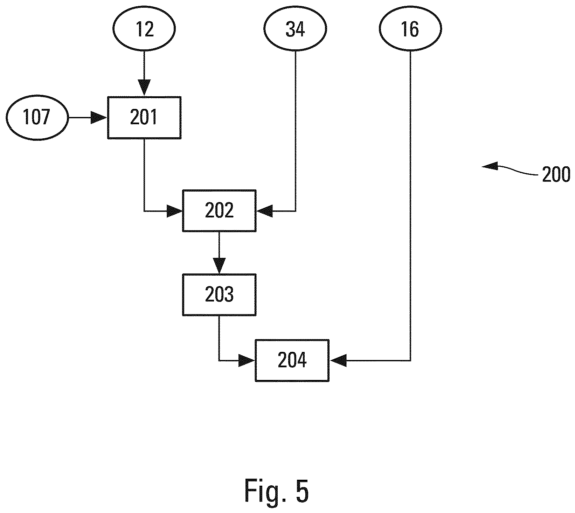

Un procédé 200 pour l'assemblage de la mouture de support 14, l'élément de liaison 12 et la vertèbre 16 en vue d'obtenir la première réalisation de l'invention est schématisé à la figure 5.

Le matériau 107 favorisant l'adhésion est placé sur l'élément de liaison 12 dans les zones d'adhésion lors d'une étape de placement 201. Les tronçons longitudinaux 34 sont insérés dans l'élément de liaison 12 lors d'une étape d'insertion 202 des tronçons formant la monture. Les tronçons longitudinaux 34 sont collés ou soudés à l'élément de liaison 12 lors d'une étape de fixation 203. Préférentiellement, durant l'étape de fixation 203, un outil de soudage est inséré dans les trous 102 afin de souder par laser ou ultrason localement les zones d'adhésion 101 pour générer une bonne adhésion entre les tronçons longitudinaux 34 et l'élément de liaison 12. La vertèbre 16 est ensuite insérée dans le corps tubulaire 22 lors d'une étape d'insertion 204 de la vertèbre.

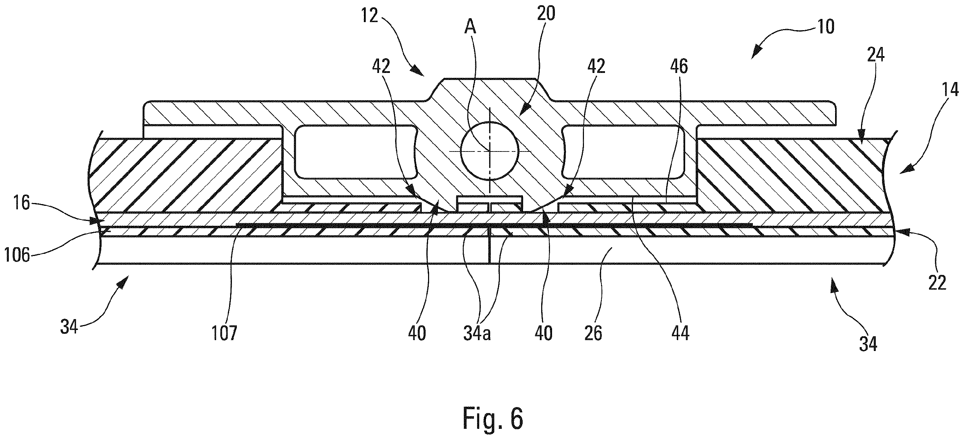

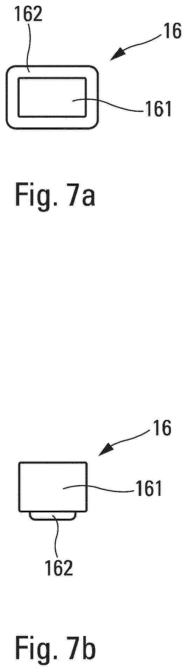

Selon une deuxième réalisation de l'invention représentée aux figures 6 et 7, les tronçons longitudinaux 34 qui forment la monture 14 sont fixés par soudage ou collage à la vertèbre 16. La fixation entre les tronçons longitudinaux 34 et la vertèbre 16se fait préférentiellement sur une zone d'adhésion 105 centrale. Alternativement, la zone d'adhésion 105 peut correspondre à l'ensemble de l'interface entre les tronçons longitudinaux 34 et la vertèbre 16 ou être uniquement sur la face inférieure ou supérieure de la vertèbre 16. La zone d'adhésion 105 peut éventuellement correspondre à l'ensemble de la longueur du balai. Lors de l'assemblage du balai, le matériau 107 favorisant l'adhésion peut être présent sur la vertèbre 16 et/ou les tronçons longitudinaux 34 dans la zone d'adhésion 105 avant l'insertion de la vertèbre 16 dans le corps tubulaire 22. Ce matériau 107 augmente la solidité de la fixation par soudage ou collage. Le matériau 107 peut être par exemple un adhésif qui améliore le collage. Alternativement, le matériau 107 peut être aussi un matériau de même nature que le corps tubulaire 22 qui améliore l'adhésion par soudage, par exemple du polypropylène si le corps tubulaire est en polypropylène. Le matériau 107 peut avoir été déposé ou surmoulé sur la vertèbre 16, comme montré à la figure 7 où la vertèbre 16 comprend une couche 162 du matériau 107. La couche 162 peut être présente tout autour du corps 161 central de la vertèbre 16 (figure 7 a) ou être localement présente sur une ou plusieurs faces, de préférence la face inférieure, du corps 161 central de la vertèbre 16 (figure 7 b).

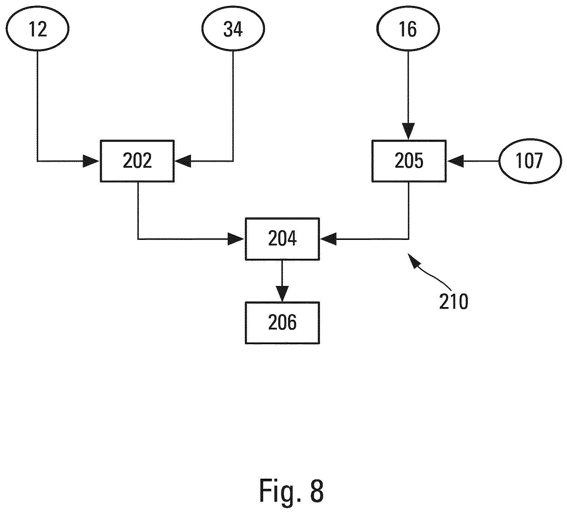

Un procédé 210 pour l'assemblage de la mouture de support 14, l'élément de liaison 12 et la vertèbre 16 en vue d'obtenir la deuxième réalisation de l'invention est schématisé à la figure 8.

Les tronçons longitudinaux 34 sont insérés dans l'élément de liaison 12 lors d'une étape d'insertion 202 des tronçons formant la monture. Le matériau 107 favorisant l'adhésion est placé sur la vertèbre 16 dans les zones d'adhésion lors d'une étape de placement 205. La vertèbre 16 est ensuite insérée dans le corps tubulaire 22 lors d'une étape d'insertion 204 de la vertèbre. Les tronçons longitudinaux 34 sont collés ou soudés à la vertèbre lors d'une étape de fixation 206. Le soudage peut se faire en faisant passer un outil de soudage entre les crochets 26.

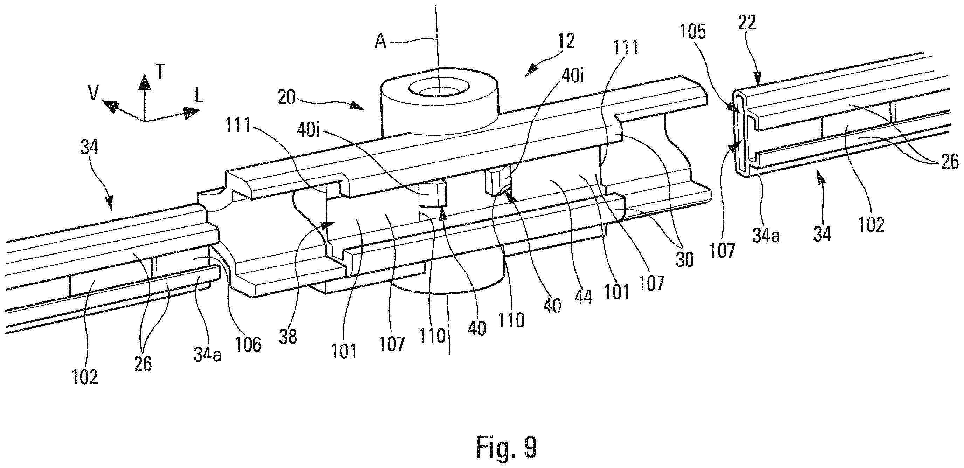

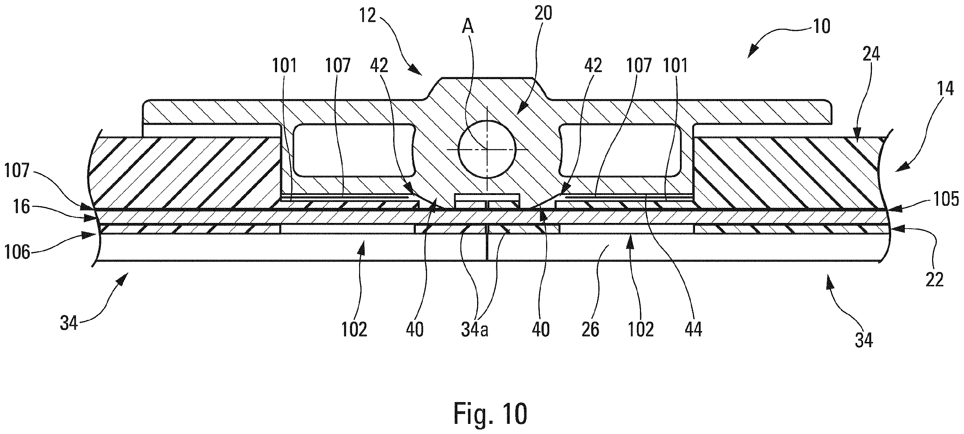

Selon une troisième réalisation de l'invention représentée aux figures 9 et 10, les tronçons longitudinaux 34 qui forment la monture 14 sont fixés par soudage ou collage à l'élément de liaison 12 et à la vertèbre 16.

La fixation entre les tronçons longitudinaux 34 et l'élément de liaison 12 se fait préférentiellement sur deux premières zones d'adhésion 101 comme décrites plus haut. La fixation entre les tronçons longitudinaux 34 et la vertèbre 16 se fait préférentiellement sur une troisième zone d'adhésion 105 qui correspond à la face supérieure de la vertèbre 16.

Lors de l'assemblage du balai, le matériau 107 favorisant l'adhésion est présent sur l'élément de liaison 12 dans les zones d'adhésion 101 avant l'insertion des tronçons longitudinaux 34 dans l'élément de liaison 12 et sur la vertèbre 16 dans la zone d'adhésion 105 avant l'insertion de la vertèbre 16 dans le corps tubulaire 22. Ce matériau 107 augmente la solidité de la fixation. Le matériau 107 peut être par exemple un adhésif qui améliore le collage. Alternativement, le matériau 107 peut être aussi un matériau de même nature que le corps tubulaire 22 qui améliore l'adhésion par soudage, par exemple du polypropylène si le corps tubulaire est en polypropylène. Le matériau 107 peut être de nature différente suivant qu'il est à l'interface entre les tronçons longitudinaux 34 et l'élément de liaison 12 ou à l'interface entre les tronçons longitudinaux 34 et la vertèbre 16.

Les tronçons longitudinaux 34 sont chacun percés d'un trou 102 sur une paroi inférieure horizontale 106 du corps tubulaire 22. Les trous 102 sont entre les crochets 26 et substantiellement face aux zones d'adhésion 101. Les trous 102 ont une taille suffisante pour le passage d'un outil pour le soudage. Les trous 102 ont substantiellement la même longueur que les zones d'adhésion 101 et une largeur comprise entre la distance séparant les extrémités de deux crochets 26 se faisant face et la distance séparant les deux crochets 26 à l'endroit où ils rejoignent le corps tubulaire 22. Lors de l'assemblage du balai, après l'insertion des tronçons longitudinaux 34 dans l'élément de liaison 12 et préférentiellement avant l'insertion de la vertèbre 16, les trous 102 permettent le passage d'un outil pour le soudage des tronçons longitudinaux 34 à l'élément de liaison 12. Lors de l'assemblage du balai, après l'insertion de la vertèbre 16 dans le corps tubulaire 22, les trous 102 permettent le passage d'un outil pour le soudage de la vertèbre 16 au le corps tubulaire 22.

Un procédé 220 pour l'assemblage de la mouture de support 14, l'élément de liaison 12 et la vertèbre 16 en vue d'obtenir la troisième réalisation de l'invention est le suivant.

Le matériau 107 favorisant l'adhésion est placé sur l'élément de liaison 12 dans les zones d'adhésion lors d'une étape de placement 201. Les tronçons longitudinaux 34 sont insérés dans l'élément de liaison 12 lors d'une étape d'insertion 202 des tronçons formant la monture. Les tronçons longitudinaux 34 sont collés ou soudés à l'élément de liaison 12 lors d'une étape de fixation 203.

Le matériau 107 favorisant l'adhésion est placé sur la vertèbre 16 dans les zones d'adhésion lors d'une étape de placement 205. La vertèbre 16 est ensuite insérée dans le corps tubulaire 22 lors d'une étape d'insertion 204 de la vertèbre. Les tronçons longitudinaux 34 sont collés ou soudés à la vertèbre lors d'une étape de fixation 206.

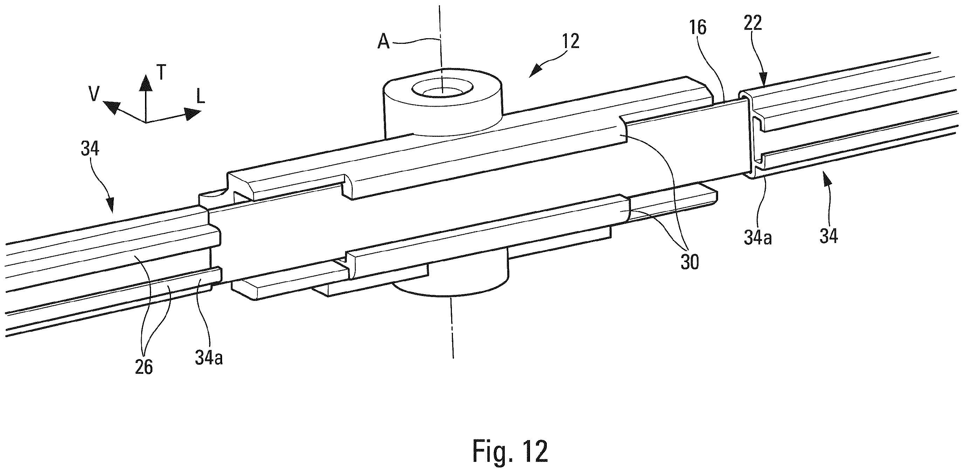

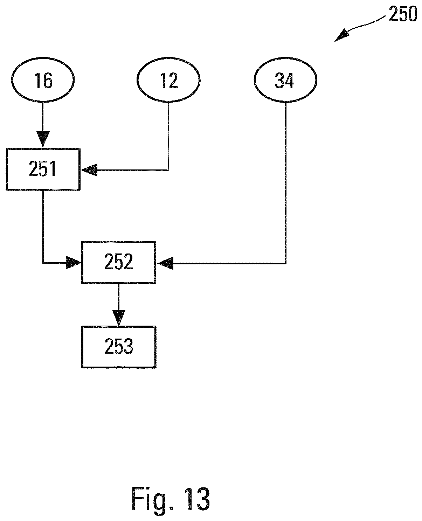

Les figures 12 et 13 montrent une réalisation alternative d'un procédé 250 selon l'invention. La vertèbre 16 est montée dans l'élément de liaison 12 et bloquée dans ce dernier à l'étape de montage 251. Une étape de soudage ou collage optionnelle peut alors être réalisée entre la vertèbre 16 et l'élément de liaison 12.

Comme montré à la figure 12, les tronçons longitudinaux 34 viennent ensuite, à l'étape 252, coulisser sur la vertèbre 16 pour accoster au niveau de l'élément de liaison 12. Enfin, un soudage ou collage 253 est réalisé entre les tronçons longitudinaux 34 et la vertèbre 16.

Ce procédé 250 est particulièrement adapté dans le cas d'un balai d'essuie-glace chauffant qui comprend des éléments chauffants et électriques car il facilite le montage et la connexion des éléments chauffants et électriques. Dans ce cas, un film chauffant et/ou une liaison électrique peuvent être préassemblés sur la vertèbre 16 avant son montage 251 dans l'élément de liaison 12.

Le fait de coller ou souder les tronçons longitudinaux 34 à l'élément de liaison 12 permet d'augmenter la solidité du balai d'essuie-glace et permet une bonne continuité des formes, notamment au niveau de l'ergot. En effet, le passage des extrémités longitudinales internes 34a des tronçons longitudinaux 34 sur les ergots 40 peut amener à une déformation permanente de ces extrémités longitudinales internes 34a et donc à une mauvaise fixation mécanique des tronçons longitudinaux 34 sur l'élément de liaison 12.

## Revendications

1. Balai d'essuie-glace (10) d'orientation principale longitudinale, comportant :
- un élément de liaison (12) du balai (10) avec un bras d'entraînement;
- une monture (14) de support longitudinale qui est reliée à l'élément de liaison (12) et qui comporte un corps (22) supérieur d'axe principal longitudinal et des moyens inférieurs (26) de support d'une raclette d'essuyage (18); et
- au moins un élément structurel (16) en forme de lame longitudinale, qui est monté dans ledit corps (22), la monture (14) étant collée ou soudée à l'élément structurel (16) et/ou à l'élément de liaison (12) **caractérisé en ce que** la monture (14) ou le corps (22) comporte des trous (102, 108) en face de zones (101, 105) où la monture (14) est collée ou soudée à l'élément structurel (16) et/ou à l'élément de liaison (12), les trous étant configurés pour autoriser le passage d'un outil de soudage ou collage.

2. Balai d'essuie-glace (10) selon la revendication 1, dans lequel le corps (22) est soudé à l'élément structurel (16) et/ou à l'élément de liaison (12).

3. Balai d'essuie-glace (10) selon la revendication 1 ou 2, dans lequel la partie de la monture (14) qui est collée ou soudée à l'élément de liaison (12) est une portion d'une paroi supérieure horizontale (46) du corps (22).

4. Balai d'essuie-glace (10) selon l'une quelconque des revendications précédentes, dans lequel au moins un des éléments parmi la monture (14), le corps (22) et l'élément structurel (16) comporte un matériau (107) favorisant le collage ou le soudage dudit élément sur la monture (14) ou le corps (22).

5. Balai d'essuie-glace (10) selon la revendication 4, dans lequel le matériau (107) est de même nature que le corps (22) ou la monture (14).

6. Balai d'essuie-glace (10) selon l'une quelconque des revendications précédentes, dans lequel la monture (14) comprend une nervure supérieure longitudinale (24) qui s'étend verticalement vers le haut au-dessus du corps (22).

7. Procédé d'assemblage d'un balai d'essuie-glace (10) d'orientation principale longitudinale comportant :
- un élément de liaison (12) du balai (10) avec un bras d'entraînement;
- une monture (14) de support longitudinale qui est reliée à l'élément de liaison (12) et qui comporte un corps (22) supérieur d'axe principal longitudinal et des moyens inférieurs (26) de support d'une raclette d'essuyage (18); et
- au moins un élément structurel (16) en forme de lame longitudinale, qui est monté dans ledit corps (22), le procédé comprenant une étape de collage ou soudage de la monture (14) de support à l'élément structurel (16) et/ou l'élément de liaison (12),
le procédé comprenant les étapes suivantes en ordre quelconque:
- liaison (202) de tronçons longitudinaux (34) de ladite monture (14) audit élément de liaison (12);
- montage (204) dudit élément structurel (16) dans le corps (22) formé par les tronçons longitudinaux (34); et
- collage ou soudage (203, 206) des tronçons longitudinaux (34) à l'élément de liaison (12) et/ou à l'élément structurel (16),
ou
le procédé comprenant les étapes suivantes en ordre quelconque :
- montage (204) dudit élément structurel (16) dans l'élément de liaison (12);
- liaison (202) de tronçons longitudinaux (34) de ladite monture (14) audit élément de liaison (12); et
- collage ou soudage (203, 206) des tronçons longitudinaux (34) à l'élément de liaison (12) et/ou à l'élément structurel (16), **caractérisé en ce que** le soudage est réalisé avec un outil introduit dans un trou (102, 108) d'au moins un des tronçons longitudinaux (34).

8. Procédé selon la revendication 7, dans lequel le soudage (203, 206) est réalisé par ultrason ou laser.

9. Procédé selon l'une quelconque des revendications 7 à 8, dans lequel le collage ou le soudage est réalisé sans apport de matière.

10. Procédé selon l'une quelconque des revendications 7 à 9, comprenant en outre au moins une des étapes suivantes:
- placement (201, 205) d'un matériau (107) favorisant le collage ou le soudage sur l'élément de liaison (12); et
- placement (201, 205) d'un matériau (107) favorisant le collage ou le soudage sur l'élément structurel (16).

## Patentansprüche

1. Scheibenwischerblatt (10) mit einer Hauptausrichtung in der Längsrichtung, umfassend:
- ein Element zur Verbindung (12) des Wischerblattes (10) mit einem Antriebsarm;
- ein Gestell (14) zur Längsabstützung, welches mit dem Verbindungselement (12) verbunden ist und welches einen oberen Körper (22) mit einer längs verlaufenden Hauptachse und untere Haltemittel (26) für einen Wischgummi (18) aufweist; und
- wenigstens ein Strukturelement (16) in Form einer längs verlaufenden Leiste, welche im Körper (22) angebracht ist, wobei das Gestell (14) an das Strukturelement (16) und/oder an das Verbindungselement (12) geklebt oder geschweißt ist,
**dadurch gekennzeichnet, dass** das Gestell (14) oder der Körper (22) Löcher (102, 108) gegenüber von Bereichen (101, 105) aufweist, wo das Gestell (14) an das Strukturelement (16) und/oder an das Verbindungselement (12) geklebt oder geschweißt ist, wobei die Löcher dafür ausgebildet sind, den Durchgang eines Schweiß- oder Klebwerkzeugs zu ermöglichen.

2. Scheibenwischerblatt (10) nach Anspruch 1, wobei der Körper (22) an das Strukturelement (16) und/oder an das Verbindungselement (12) geschweißt ist.

3. Scheibenwischerblatt (10) nach Anspruch 1 oder 2, wobei der Teil des Gestells (14), welcher an das Verbindungselement (12) geklebt oder geschweißt ist, ein Abschnitt einer horizontalen oberen Wand (46) des Körpers (22) ist.

4. Scheibenwischerblatt (10) nach einem der vorhergehenden Ansprüche, wobei wenigstens eines der Elemente Gestell (14), Körper (22) und Strukturelement (16) ein Material (107) umfasst, welches das Kleben oder Schweißen dieses Elements an das Gestell (14) oder den Körper (22) begünstigt.

5. Scheibenwischerblatt (10) nach Anspruch 4, wobei sein Material (107) von derselben Art ist wie das des Körpers (22) oder des Gestells (14).

6. Scheibenwischerblatt (10) nach einem der vorhergehenden Ansprüche, wobei das Gestell (14) eine obere Längsrippe (24) umfasst, welche sich oberhalb des Körpers (22) vertikal nach oben erstreckt.

7. Verfahren zum Zusammenbau eines Scheibenwischerblattes (10) mit einer Hauptausrichtung in der Längsrichtung, welches umfasst:
- ein Element zur Verbindung (12) des Wischerblattes (10) mit einem Antriebsarm;
- ein Gestell (14) zur Längsabstützung, welches mit dem Verbindungselement (12) verbunden ist und welches einen oberen Körper (22) mit einer längs verlaufenden Hauptachse und untere Haltemittel (26) für einen Wischgummi (18) aufweist; und
- wenigstens ein Strukturelement (16) in Form einer längs verlaufenden Leiste, welche im Körper (22) angebracht ist,
wobei das Verfahren einen Schritt des Klebens oder Schweißens des Stützgestells (14) an das Strukturelement (16) und/oder das Verbindungselement (12) umfasst,
wobei das Verfahren die folgenden Schritte in beliebiger Reihenfolge umfasst:
- Verbinden (202) von Längsabschnitten (34) des Gestells (14) mit dem Verbindungselement (12);
- Anbringung (204) des Strukturelements (16) in dem Körper (22), der von den Längsabschnitten (34) gebildet wird; und
- Kleben oder Schweißen (203, 206) der Längsabschnitte (34) an das Verbindungselement (12) und/oder an das Strukturelement (16),
oder
wobei das Verfahren die folgenden Schritte in beliebiger Reihenfolge umfasst:
- Anbringung (204) des Strukturelements (16) in dem Verbindungselement (12);
- Verbinden (202) von Längsabschnitten (34) des Gestells (14) mit dem Verbindungselement (12); und
- Kleben oder Schweißen (203, 206) der Längsabschnitte (34) an das Verbindungselement (12) und/oder an das Strukturelement (16),
**dadurch gekennzeichnet, dass** das Schweißen mit einem Werkzeug durchgeführt wird, das in ein Loch (102, 108) wenigstens eines der Längsabschnitte (34) eingeführt wird.

8. Verfahren nach Anspruch 7, wobei das Schweißen (203, 206) mittels Ultraschall oder Laser durchgeführt wird.

9. Verfahren nach einem der Ansprüche 7 bis 8, wobei das Kleben oder das Schweißen ohne Zugabe von Material durchgeführt wird.

10. Verfahren nach einem der Ansprüche 7 bis 9, welches außerdem wenigstens einen der folgenden Schritte umfasst:
- Anordnen (201, 205) eines Materials (107), welches das Kleben oder das Schweißen begünstigt, auf dem Verbindungselement (12); und
- Anordnen (201, 205) eines Materials (107), welches das Kleben oder das Schweißen begünstigt, auf dem Strukturelement (16).

## Claims

1. Windscreen wiper (10) of longitudinal main orientation, comprising:
- a link element (12) linking the wiper (10) with a drive arm;
- a longitudinal support mounting (14) which is linked to the link element (12) and which comprises a top body (22) of longitudinal main axis and bottom means (26) supporting a wiper blade (18); and
- at least one structural element (16) in the form of a longitudinal blade, which is mounted in said body (22), the mounting (14) being glued or welded to the structural element (16) and/or to the link element (12), **characterized in that** the mounting (14) or the body (22) comprises holes (102, 108) facing zones (101, 105) in which the mounting (14) is glued or welded to the structural element (16) and/or to the link element (12), the holes being configured to allow the passage of a welding or gluing tool.

2. Windscreen wiper (10) according to Claim 1, wherein the body (22) is welded to the structural element (16) and/or to the link element (12).

3. Windscreen wiper (10) according to Claim 1 or 2, wherein the part of the mounting (14) which is glued or welded to the link element (12) is a portion of a horizontal top wall (46) of the body (22) .

4. Windscreen wiper (10) according to any one of the preceding claims, wherein at least one of the elements out of the mounting (14), the body (22) and the structural element (16) comprises a material (107) facilitating the gluing or the welding of said element onto the mounting (14) or the body (22).

5. Windscreen wiper (10) according to Claim 4, wherein the material (107) is of the same nature as the body (22) or the mounting (14).

6. Windscreen wiper (10) according to any one of the preceding claims, wherein the mounting (14) comprises a longitudinal top rib (24) which extends vertically upwards on top of the body (22) .

7. Method for assembling a windscreen wiper (10) of longitudinal main orientation comprising:
- a link element (12) linking the wiper (10) with a drive arm;
- a longitudinal support mounting (14) which is linked to the link element (12) and which comprises a top body (22) of longitudinal main axis and bottom means (26) supporting a wiper blade (18); and
- at least one structural element (16) in the form of a longitudinal blade, which is mounted in said body (22),
the method comprising a step of gluing or welding of the support mounting (14) to the structural element (16) and/or the link element (12),
the method comprising the following steps in any order:
- linking (202) longitudinal sections (34) of said mounting (14) to said link element (12);
- mounting (204) said structural element (16) in the body (22) formed by the longitudinal sections (34); and
- gluing or welding (203, 206) the longitudinal sections (34) to the link element (12) and/or to the structural element (16),
or
the method comprising the following steps in any order:
- mounting (204) said structural element (16) in the link element (12);
- linking (202) longitudinal sections (34) of said mounting (14) to said link element (12); and
- gluing or welding (203, 206) the longitudinal sections (34) to the link element (12) and/or to the structural element (16),
**characterized in that** the welding is done with a tool introduced into a hole (102, 108) of at least one of the longitudinal sections (34).

8. Method according to Claim 7, wherein the welding (203, 206) is done by ultrasound or laser.

9. Method according to either one of Claims 7 and 8, wherein the gluing or the welding is done without the addition of material.

10. Method according to any one of Claims 7 to 9, further comprising at least one of the following steps:
- placing (201, 205) a material (107) facilitating the gluing or the welding on the link element (12); and
- placing (201, 205) a material (107) facilitating the gluing or the welding on the structural element (16).
